# EUROPÄISCHE PATENTANMELDUNG

(11) **EP 2 752 280 A2**
(43) Veröffentlichungstag der Anmeldung: **09.07.2014**
(21) Anmeldenummer: 13199282.8
(22) Anmeldetag: 23.12.2013
(51) Int. Cl.: B28C 7/16, B29C 39/00

(54) **Transportbetonwerk mit einer Einfülleinrichtung, sowie Verfahren zur Herstellung einer Einfülleinrichtung**

(30) Priorität: 07.01.2013 DE 102013100082
(71) Anmelder: Arthur Habermann GmbH & Co. KG, 58454 Witten (DE)
(72) Erfinder: Tietzer, Michael, 44879 Bochum (DE)
(74) Vertreter: Meinke, Dabringhaus und Partner GbR

(57) **Zusammenfassung**

Die Erfindung betrifft ein Transportbetonwerk mit einer Einfülleinrichtung zum Einfüllen von Transportbeton in einen Fahrmischer, wobei die Einfülleinrichtung einen Einfülltrichter (1) aufweist, in welche eine trichterförmige Innenauskleidung (5) aus Polyurethan austauschbar eingesetzt ist, wobei erfindungsgemäß die trichterförmige Innenauskleidung (5) aus einem zweischichtigen, gegossenen Polyurethan besteht. Ferner betrifft die Erfindung die Innenauskleidung selbst und ein Verfahren zur Herstellung derselben.

## Beschreibung

Die Erfindung betrifft ein Transportbetonwerk mit einer Einfülleinrichtung zum Einfüllen von Transportbeton in einen Fahrmischer, wobei die Einfülleinrichtung einen Einfülltrichter aufweist, in welche eine trichterförmige Innenauskleidung aus Polyurethan austauschbar eingesetzt ist.

Außerdem betrifft die Erfindung die trichterförmige Innenauskleidung selbst und ein Verfahren zur Herstellung einer solchen Innenauskleidung.

In einem Transportbetonwerk wird aus verschiedenen Bestandteilen, insbesondere Sand, Kies, Zement, Wasser und etwaigen Zuschlagsstoffen Beton gemischt, der mit Hilfe von fahrbaren Betonmischern (Fahrmischern) zur jeweiligen Baustelle transportiert wird, wobei während des Transportes die Betonbestandteile im Fahrmischer weiter gemischt werden. Zum Einfüllen des Transportbetons in den Fahrmischer ist ein Transportbetonwerk mit wenigstens einer Einfülleinrichtung ausgerüstet, welcher einen Einfülltrichter und einen an dessen Auslauf befestigten Betonauslaufschlauch aufweisen. Der Einfülltrichter ist auf einem unterfahrbaren Gerüst angeordnet, von dem der nach unten geöffnete Betonschlauch nach unten herabhängt.

Fahrmischer, welche den Beton vom Transportbetonwerk zur Baustelle transportieren, weisen üblicherweise einen nach oben geöffneten Einfülltrichter auf, durch welchen der Transportbeton in die Mischtrommel des Fahrmischers eingefüllt wird. Zum Aufnehmen seiner Betonladung fährt der Fahrmischer meist rückwärts unter das Gestell und rangiert seinen Einfülltrichter unter den Betonauslaufschlauch, sodass dieser in den Einfülltrichter des Fahrmischers hinein taucht. Der Transportbeton verlässt somit das Transportbetonwerk durch den Einfülltrichter und den Betonauslaufschlauch und fließt weiter durch den Einfülltrichter des Fahrmischers in dessen Mischtrommel. Nach Abschluss des Füllvorgangs fährt der Fahrmischer unter dem Gestell hervor, sodass die Einfülleinrichtung für den nächsten Füllvorgang frei ist.

Neben dem Betonauslaufschlauch ist auch der Einfülltrichter der Einfülleinrichtung eines Transportbetonwerkes großen Beanspruchungen und einem hohem Verschleiß ausgesetzt, der vor allem durch den ständigen Durchfluss von abrasivem Beton bedingt ist. Außerdem lassen sich Anbackungen am Einfülltrichter nicht vermeiden, sodass der Einfülltrichter regelmäßig gereinigt werden muss. In der Regel ist deshalb der Einfülltrichter mit einer austauschbaren trichterförmigen Innenauskleidung ausgerüstet, der nach Art eines, allerdings nach unten offenen, Filterbeutels bei einem Kaffeefilter eingesetzt ist. Allerdings besteht eine solche trichterförmige Innenauskleidung aus einem wesentlich festeren Material und ist am eigentlichen Einfülltrichter befestigt. Dabei kann der Einfülltrichter zur Materialeinsparung Wanddurchbrechungen aufweisen und muss nicht vollflächig ausgebildet sein. Der Einfülltrichter besteht dann nur aus einer Art Rahmenstruktur mit einem oberen und einem unteren konischen Ringbereich und dazwischen befindlichen Verbindungsstreben.

Derartige trichterförmige Innenauskleidungen werden bisher entweder aus Gummi oder aus Polyurethan gefertigt. Da Innenauskleidungen aus Gummi nur eine geringe Stabilität aufweisen, werden sie in erster Linie ausschließlich für vollflächig ausgebildete Einfülltrichter verwendet und in diese vorzugsweise eingeklebt. Da ein Einfülltrichter einer Einfülleinrichtung eines Transportbetonwerkes schlecht zugänglich ist, ist der Austausch einer solchen Innenauskleidung aus Gummi aufwändig und zeitintensiv, was zu sehr kostenintensiven Stillstandzeiten des Transportbetonwerkes führt.

Zur Vermeidung dieser Nachteile sind auch bereits trichterförmige Innenauskleidungen aus Polyurethan bekannt geworden, welche beispielsweise von der Anmelderin hergestellt werden. Diese Trichterauskleidungen aus Polyurethan können lose in den Einfülltrichter eingesetzt und müssen nicht verklebt werden, was die Austauschbarkeit erleichtert, d.h. die Montage bzw. Demontage lässt sich einfacher und schneller durchführen. Da sich in der Praxis herausgestellt hat, dass die wesentliche Materialabnutzung der Innenauskleidung nur etwa auf einen Viertel bzw. einen Drittel der Mantelfläche erfolgt, kann Innenauskleidung auch drei- bis viermal länger verwendet werden, indem sie ach erster Abnutzung in einer anderen Winkellage in den Einfülltrichter eingesetzt wird. Außerdem weisen derartige Innenauskleidungen aus Polyurethan gegenüber Gummiauskleidungen eine höhere Lebensdauer auf. Ferner sind derartige Auskleidungen beständig gegen Schalöle und atmosphärische Einflüsse.

Auch wenn sich eine solche Innenauskleidung aus Polyurethan in der Praxis gut bewährt hat, kommt es gleichwohl vor, dass ein Verschleiß der Innenauskleidung zu spät bemerkt wird und ein Austausch derselben bzw. ein Einsetzen in anderer Winkellage unplanmäßig notwendig ist, was mangels Verfügbarkeit eines Ersatzes ggf. nicht unmittelbar möglich ist oder zumindest zu ungewünschten zeitlichen Verzögerungen und damit zum Stillstand des Transportbetonwerks führt.

Gegenüber diesem Stand der Technik liegt der Erfindung die Aufgabe zu Grunde, die trichterförmige Innenauskleidung weiter zu verbessern.

Diese Aufgabe wird bei einem Transportbetonwerk der eingangs bezeichneten Art erfindungsgemäß dadurch gelöst, dass die trichterförmige Innenauskleidung aus einem zweischichtigen, gegossenen Polyurethan besteht.

Durch diesen zweischichtigen Aufbau der Innenauskleidung lassen sich die Festigkeitseigenschaften derselben gezielt einstellen, indem für beide Schichten Polyurethan mit unterschiedlichen Eigenschaften verwendet wird. So kann die Innenschicht abriebbeständig und chemisch beständig ausgebildet sein, während die äußere Polyurethanschicht andere Eigenschaften aufweisen kann. Dadurch lässt sich die Innenauskleidung an die tatsächlichen Bedürfnisse anpassen, sodass die Standzeit derselben erhöht werden kann. Außerdem kann der Verschleiß der Innenauskleidung sozusagen sichtbar gemacht werden, indem die beiden Polyurethanschichten unterschiedlich eingefärbt sind. Wenn die innere Schicht verschliessen ist, ist dann die äußere Schicht erkennbar. In diesem Zustand ist die Innenauskleidung dann aber noch für einen gewissen Zeitraum funktionsfähig, sodass der Austausch bzw. die Neuausrichtung der Innenauskleidung ohne unnötige Stillstandzeiten für das Transportbetonwerk entsprechend geplant werden kann.

Zur Herstellung einer solchen trichterförmigen Innenauskleidung ist verfahrensgemäß vorgesehen, dass zunächst eine erste Charge flüssigen Polyurethans in eine flache, abgewickelte Trichterform gegossen wird, anschließend eine zweite Charge flüssigen Polyurethans in die flache Trichterform auf die erste Charge Polyurethan gegossen wird, derart, dass sich ein zweischichtiger, flacher Formkörper bildet, und dass schließlich aus dem flachen zweischichtigen Formkörper die trichterförmige Innenauskleidung geformt wird.

Die Innenauskleidung wird somit in einem sogenannten "Tisch-Gieß-Verfahren" hergestellt. Zunächst wird die erste Charge Polyurethans in eine entsprechende flache Form, welche die Abwicklung eines Trichters darstellt, gegossen und nach einer gewissen Aushärtung der Charge, welche die erste Schicht bildet, wird auf diese Schicht die zweite Charge Polyurethans gegossen. Nachdem beide Schichten ausreichend ausgehärtet sind, wird aus diesem zweischichtigen Formkörper die Trichterform gebildet.

Dabei ist bevorzugt vorgesehen, dass die trichterförmige Innenauskleidung mit einem überlappenden Randbereich gebildet wird.

Insbesondere bei sehr großen Einfülltrichtern ist vorzugsweise vorgesehen, dass die trichterförmige Innenauskleidung aus zwei halbtrichterförmig abgewickelten, flachen, zweischichtigen Formkörpern gebildet wird.

Wie vorerwähnt, ist bevorzugt vorgesehen, dass das Polyurethan der ersten Charge und das Polyurethan der zweiten Charge unterschiedliche Festigkeitseigenschaften, insbesondere unterschiedliche Abriebeigenschaften aufweisen. So weist insbesondere das Polyurethan der Charge, welches die Innenschicht der später gebildeten trichterförmigen Innenauskleidung aufweist, eine hohe Abriebbeständigkeit auf und ist vorzugsweise chemisch beständig gegen Schalöle und dergleichen.

Weiterhin ist vorteilhaft vorgesehen, dass das Polyurethan der ersten Charge und das Polyurethan der zweiten Charge unterschiedlich eingefärbt sind. Wenn die innere Schicht zumindest bereichsweise verschliessen ist, kommt dann die andersfarbige äußere Schicht der Innenauskleidung zum Vorschein, sodass für das Bedienungspersonal erkennbar ist, das in absehbarer Zeit ein Austausch bzw. eine Neuausrichtung der Innenauskleidung erforderlich ist.

Die Erfindung ist nachstehend anhand der Zeichnungen beispielshaft näher erläutert. Diese zeigt in:
- Fig. 1: eine Draufsicht auf einen flachen zweischichtigen Formkörper als halbtrichterförmige Abwicklung.
- Fig. 2: eine Seitensicht der Fig. 1.
- Fig. 3: ein vergrößertes Detail III gem. Fig. 2.
- Fig. 4: eine perspektivische Ansicht des Formkörpers nach Fig. 1.
- Fig. 5: eine aus zwei Formkörpern nach Fig. 1-4 gebildete trichterförmige Innenauskleidung in perspektivischer Darstellung.
- Fig. 6: die Innenauskleidung nach Fig. 5 in Draufsicht und
- Fig. 7: in perspektivischer Darstellung einen Einfülltrichter einer Einfülleinrichtung eines Transportbetonwerkes mit eingesetzter trichterförmiger Innenauskleidung.

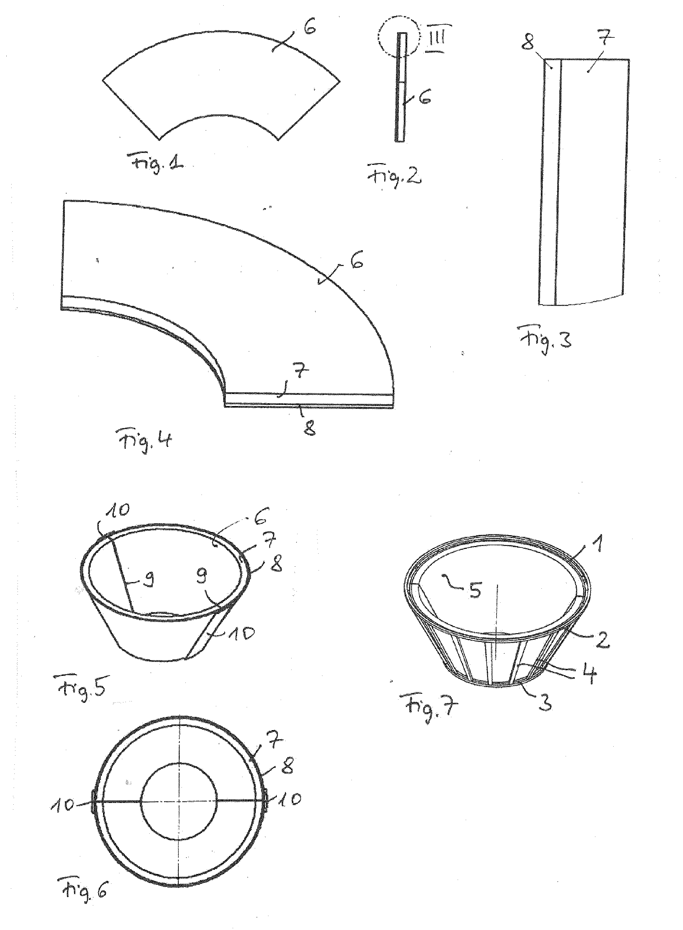

Transportbetonwerke sind üblicherweise mit wenigstens einer oder ggf. mehreren Einfülleinrichtungen ausgerüstet, welche dazu dienen, den im Transportbetonwerk zusammengemischten Beton über die Einfülleinrichtung in einen Betonmischer bzw. Fahrmischer einzufüllen. Dazu fährt der Fahrmischer unter den Einfülltrichter der Einfülleinrichtung. Ein solcher Einfülltrichter ist in Fig. 7 angedeutet und mit 1 bezeichnet. Dieser Einfülltrichter 1 ist Bestandteil eines Gestells bzw. einer Tribüne des Betontransportwerkes und in einer Höhe angeordnet, dass ein Fahrmischer mit üblichen Abmessungen mit seinem Einfülltrichter unterhalb des Einfülltrichters 1 der Einfülleinrichtung angeordnet werden kann.

Der Einfülltrichter 1 kann unterschiedlich ausgebildet sein. Es kann sich um einen Trichter mit vollständigen konischen Wandflächen handeln oder auch nur eine Art Rahmenstruktur, wie dies in Fig. 7 dargestellt ist. Bei dieser Rahmenstruktur weist der Einfülltrichter 1 einen oberen konischen Ringbereich 2 und einen unteren konischen Ringbereich 3 auf, der nach unten hin offen ist, wobei die beiden Ringbereiche 2, 3 durch einen Umfang verteilte Verbindungstreben 4 miteinander verbunden sind.

An der Unterseite des Einfülltrichters 1 ist üblicherweise ein Betonauslaufschlauch befestigt, der zeichnerisch nicht dargestellt ist und auf den es im Rahmen der Erfindung nicht weiter ankommt.

In den Einfülltrichter 1 ist eine allgemein mit 5 bezeichnete erfindungsgemäße trichterförmige Innenauskleidung aus Polyurethan austauschbar eingesetzt.

Diese Innenauskleidung 5 besteht aus einem zweischichtigen, gegossenen Polyurethan, wozu gemäß Fig. 1 bis 4 verfahrensmäßig im sog. "Tisch-GießVerfahren" zunächst eine erste Charge flüssigen Polyurethans in eine flache, abgewickelte Trichterform gegossen wird. Je nach Größe der zu erzeugenden Innenauskleidung kann es sich auch nur um eine halbe Trichterform handeln, wie dies in den Fig. 1 bis 4 dargestellt ist. Die zu bildende trichterförmige Innenauskleidung 5 besteht dann aus zwei Formkörpern. Nachdem die erste Charge flüssigen Polyurethans in die Trichterform eingegossen worden ist und einen teigigen Zustand angenommen hat, wird eine zweite Charge flüssigen Polyurethans in die flache Trichterform auf die erste Charge Polyurethans gegossen, derart, dass sich ein zweischichtiger Formkörper ausbildet. Dieser zweischichtige Formkörper ist in den Figuren mit 6 bezeichnet. Wie am besten aus Fig. 3 hervorgeht, weist der Formkörper 6 somit eine innere Schicht 7 aus der einen Charge flüssigen Polyurethans und eine äußere Schicht 8 aus der anderen Charge flüssigen Polyurethans auf.

Die beiden Chargen Polyurethans weisen vorzugsweise unterschiedliche Festigkeitseigenschaften auf und sie sind vorzugsweise unterschiedlich eingefärbt. Bevorzugt ist die so gebildete innere Schicht 7 des Formkörpers 6, die beim Betrieb der Einfülleinrichtung dem größten Verschleiß unterworfen ist, mit besseren Abriebeigenschaften ausgebildet, als die äußere Schicht 8 und darüber hinaus bevorzugt dicker als die äußere Schicht 8 ausgebildet. Im dargestellten Ausführungsbeispiel beträgt das Wandstärkenverhältnis etwa 4 : 1.

Nach Abschluss des Gießvorganges wird der so gebildete, zweischichtige Formkörper 6 in einem Zustand aus der Form entnommen, das der Formkörper 6 anschließend in eine Halbtrichterform umgeformt werden kann. Aus zwei solchen halbtrichterförmigen Formkörpern 6 wird dann die trichterförmige Innenauskleidung 5 geformt.

In den randseitigen Verbindungsbereichen 9 zweier halbtrichterförmiger Formkörper 6 oder in einem einzigen Verbindungsbereich 9 bei einem einzigen trichterförmigen Formkörper 6 werden die aneinander anliegenden Kanten geeignet miteinander verbunden, z.B. verklebt oder verschweißt. Bevorzugt ist an der Außenseite jedoch jeweils noch ein Überlappungsstreifen 10 vorgesehen, der bei dem in Fig. 5 und 6 dargestellten Ausführungsbeispiel jeweils ein eigenständiger Polyurethanstreifen ist, der vorzugsweise aus demselben Polyurethanmaterial besteht wie die äußere Schicht 8. Alternativ kann an den Formkörper 6 auch außenrandseitig ein Überlappungsbereich angegossen werden, der dann integraler Bestandteil der äußere Schicht 8 ist.

Natürlich ist die Erfindung nicht auf die dargestellten Ausführungsbeispiele beschränkt. Weitere Ausgestaltungen sind möglich, ohne den Grundgedanken zu verlassen. So kann, wie erwähnt, die Innenauskleidung 5 auch aus nur einem einzigen Formkörper 6 hergestellt werden.

### Bezugszeichenliste:

- 1: Einfülltrichter
- 2: (konischer) oberer Ringbereich
- 3: (konischer) unterer Ringbereich
- 4: Verbindungsstreben
- 5: Innenauskleidung
- 6: (zweischichtiger) Formkörper
- 7: innere Schicht
- 8: äußere Schicht
- 9: Verbindungsbereiche
- 10: Überlappungsstreifen

## Patentansprüche

1. Transportbetonwerk mit einer Einfülleinrichtung zum Einfüllen von Transportbeton in einen Fahrmischer, wobei die Einfülleinrichtung einen Einfülltrichter aufweist, in welche eine trichterförmige Innenauskleidung aus Polyurethan austauschbar eingesetzt ist,
**dadurch gekennzeichnet,**
**dass** die trichterförmige Innenauskleidung (5) aus einem zweischichtigen, gegossenen Polyurethan besteht.

2. Transportbetonwerk nach Anspruch 1,
**dadurch gekennzeichnet,**
**dass** die beiden Polyurethanschichten (7, 8) der Innenauskleidung (5) unterschiedliche Festigkeitseigenschaften, insbesondere unterschiedliche Abriebeigenschaften aufweisen.

3. Transportbetonwerk nach Anspruch 1 oder 2,
**dadurch gekennzeichnet,**
**dass** die beiden Polyurethanschichten (7, 8) der Innenauskleidung (5) unterschiedlich eingefärbt sind.

4. Trichterförmige Innenauskleidung aus einem zweischichtigen, gegossenen Polyurethan für die Einfülleinrichtung eines Transportbetonwerkes nach Anspruch 1, 2 oder 3.

5. Verfahren zur Herstellung einer trichterförmigen Innenauskleidung für die Einfülleinrichtung eines Transportbetonwerkes nach Anspruch 1, 2 oder 3, bei dem flüssiges Polyurethan in eine flache abgewickelte Trichterform gegossen wird und nachfolgend aus dem gegossenen flachen Formkörper die trichterförmige Innenauskleidung geformt wird,
**dadurch gekennzeichnet, dass**
a) eine erste Charge flüssigen Polyurethans in eine flache, abgewickelte Trichterform gegossen wird,
b) eine zweite Charge flüssigen Polyurethans in die flache Trichterform auf die erste Charge Polyurethan gegossen wird, derart dass sich ein zweischichtiger, flacher Formkörper bildet,
c) aus dem flachen, zweischichtigen Formkörper die trichterförmige Innenauskleidung geformt wird.

6. Verfahren nach Anspruch 5,
**dadurch gekennzeichnet,**
**dass** die trichterförmige Innenauskleidung mit einem überlappenden Randbereich gebildet wird.

7. Verfahren nach Anspruch 5 oder 6,
**dadurch gekennzeichnet,**
**dass** die trichterförmige Innenauskleidung aus zwei halbtrichterförmig abgewickelten flachen zweischichtigen Formkörpern gebildet wird.

8. Verfahren nach einem oder mehreren der Ansprüche 5 bis 7,
**dadurch gekennzeichnet,**
**dass** das das Polyurethan der ersten Charge und das Polyurethan der zweiten Charge unterschiedliche Festigkeitseigenschaften, insbesondere unterschiedliche Abriebeigenschaften aufweisen.

9. Verfahren nach einem oder mehreren der Ansprüche 5 bis 7,
**dadurch gekennzeichnet,**
**dass** das das Polyurethan der ersten Charge und das Polyurethan der zweiten Charge unterschiedlich eingefärbt sind
